# EUROPEAN PATENT APPLICATION

(11) **EP 4 753 067 A1**
(43) Date of publication of application: **03.06.2026**
(21) Application number: 23953652.7
(22) Date of filing: 28.09.2023
(51) Int. Cl.: H01M 50/593, H01M 10/0585, H01M 50/586

(54) **BATTERY CELL, BATTERY AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); YANG, Rui, Ningde, Fujian 352100 (CN); ZHENG, Yulian, Ningde, Fujian 352100 (CN); CAI, Runchen, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2023/122554
(87) International publication number: WO 2025/065503

(57) **Abstract**

A battery cell, a battery and an electric device. The battery cell comprises an electrode assembly and an insulating member. The insulating member comprises a first insulating portion and a second insulating portion, which are connected to each other, wherein the first insulating portion covers a first end face of the electrode assembly; the second insulating portion covers a peripheral surface of the electrode assembly; the first insulating portion has a first surface facing away from the first end face and a second surface facing the first end face; and the first surface and/or the second surface is/are provided with protrusions. The energy density by weight of a battery can be improved.

## Description

### TECHNICAL FIELD

The present application relates to the field of battery technology, and in particular, to a battery cell, a battery, and an electric apparatus.

### BACKGROUND

Energy conservation and emission reduction are key to the sustainable development of the automobile industry, and electric vehicles have become an important part of the sustainable development of the automobile industry due to their advantages of energy saving and environmental protection. For electric vehicles, battery technology is an important factor related to their development.

In the development of battery technology, how to increase the energy density of batteries is a technical problem that needs to be solved urgently in battery technology.

### SUMMARY

The present application provides a battery cell, a battery, and an electric apparatus, and the technical solution provided by the present application can increase the gravimetric energy density of the battery.

The present application is achieved through the following technical solutions:

In a first aspect, the present application provides a battery cell, the battery cell including an electrode assembly and an insulating member. The insulating member includes a first insulating portion and a second insulating portion connected to each other, the first insulating portion covering a first end face of the electrode assembly, and the second insulating portion covering an outer peripheral face of the electrode assembly. The first insulating portion has a first surface facing away from the first end face and a second surface facing the first end face, and the first surface and/or the second surface is provided with a protrusion.

In the above solution, providing a protrusion on the first surface and/or the second surface can replace the bottom support plate of the current battery cell, support the electrode assembly, and lift the electrode assembly with the protrusion, so as to reduce the risk of interference between the fillet between the first end wall and the side wall of the housing and the electrode assembly causing damage to the electrode assembly. Since the protrusion can replace the bottom support plate, the weight of the bottom support plate itself can be reduced, thereby effectively reducing the weight of the battery cell, and further increasing the gravimetric energy density of the battery.

According to some embodiments of the present application, the first surface is provided with the protrusion, and the second surface is provided with a groove at a position corresponding to the protrusion. Or, the second surface is provided with the protrusion, and the first surface is provided with a groove at a position corresponding to the protrusion.

In the above solution, by providing a groove on the other side of the first insulating portion corresponding to the protrusion, as compared with the solution of directly providing the protrusion on the first insulating portion, the weight increase caused by providing the protrusion can be effectively reduced, so that the battery has a higher gravimetric energy density.

According to some embodiments of the present application, a reinforcing member is provided in the groove.

In the above solution, by providing a reinforcing member in the groove, the structural strength of the first insulating portion can be enhanced, the supporting function of the protrusion for the electrode assembly can be improved, and the risk of collapse of the protrusion due to the weight of the electrode assembly can be reduced, thereby effectively replacing the bottom support plate, so that the battery has higher reliability under the condition of higher gravimetric energy density.

According to some embodiments of the present application, the reinforcing member includes a filler provided in the groove.

In the above solution, by providing a filler inside the groove, the structural strength of the first insulating portion can be enhanced, the supporting function of the protrusion on the electrode assembly can be improved, and the risk of collapse of the protrusion due to the weight of the electrode assembly can be reduced, so that the battery has higher reliability. In some embodiments, the filler may be a porous structure, such as sponge, and by providing sponge in the groove, the supporting effect of the protrusion on the electrode assembly can be improved, and more electrolyte can perform infiltration, which facilitates improvement of battery charge and discharge performance.

According to some embodiments of the present application, the reinforcing member includes a coating applied to an inner surface of the groove.

In the above solution, by providing a coating on the inner surface of the groove, the collapse resistance ability of the protrusion can be improved, and the protrusion effectively supports the electrode assembly, thereby effectively replacing the bottom support plate, so that the battery has higher reliability under the condition of higher gravimetric energy density.

According to some embodiments of the present application, multiple protrusions are provided, and the multiple protrusions are spaced apart.

In the above solution, by providing multiple protrusions to jointly support the electrode assembly, the risk of interference between the electrode assembly and the housing can be effectively reduced, so that the protrusions can effectively replace the bottom support plate, and the battery has higher reliability under the condition of higher gravimetric energy density.

According to some embodiments of the present application, the protrusion is a circular protrusion, an elliptical protrusion, or a strip-shaped protrusion.

In the above solution, the shape of the protrusion can be diversified to reduce the difficulty in processing the protrusion and improve the manufacturing efficiency of the battery.

According to some embodiments of the present application, the protrusion is a strip-shaped protrusion, a length direction of the protrusion is parallel to a width direction of the first end face, and a width direction of the protrusion is parallel to a length direction of the first end face.

In the above solution, by defining the protrusion as a strip-shaped protrusion, and defining the length direction of the protrusion as parallel to the width direction of the first end face, the protrusion can effectively support the electrode assembly, so that the battery has higher reliability under the condition of higher gravimetric energy density.

According to some embodiments of the present application, the multiple protrusions are spaced apart along the length direction of the first end face.

In the above solution, by defining the multiple protrusions as being spaced apart along the length direction of the first end face, the multiple strip-shaped protrusions can jointly and effectively support the electrode assembly, so that the battery has higher reliability under the condition of higher gravimetric energy density.

According to some embodiments of the present application, a maximum length of the first end face is L1, and a minimum spacing between two adjacent protrusions is L2, satisfying L1/100 ≤ L2 ≤ L1/2.

In the above solution, by defining the minimum spacing L2 between two adjacent protrusions by the maximum length L1 of the first end face, L1 and L2 satisfy L1/100 ≤ L2 ≤ L1/2, and the multiple protrusions can effectively support the electrode assembly, so that the battery has higher reliability under the condition of higher gravimetric energy density.

According to some embodiments of the present application, the battery cell further includes a housing, and the electrode assembly is disposed in the housing; a dimension of the protrusion in a direction perpendicular to the first end face is h; and the housing includes a first end wall and a side wall, the first end face is disposed opposite to the first end wall, the side wall is disposed around an edge of the first end wall, an inner surface of the side wall and an inner surface of the first end wall are connected by a fillet transition, and a radius of the fillet is R, satisfying R/10 ≤ h ≤ 2R.

In the above solution, the dimension h of the protrusion in the direction perpendicular to the first end face can be regarded as the dimension by which the electrode assembly is lifted by the protrusion, and by defining the dimension h of the protrusion in the direction perpendicular to the first end face and the radius R of the fillet between the inner surface of the side wall and the inner surface of the first end wall as satisfying R/10 ≤ h ≤ 2R, the protrusion can replace the bottom support plate to effectively perform the lifting function for the electrode assembly, so as to reduce the risk of interference between the electrode assembly and the housing of the battery cell causing damage to the electrode assembly, so that the battery has higher reliability.

According to some embodiments of the present application, 3R/10 ≤ h ≤ R is satisfied.

In the above solution, by defining h as 3R/10 ≤ h ≤ R, the electrode assembly can be effectively lifted to reduce the risk of interference between the electrode assembly and the housing of the battery cell causing damage to the electrode assembly, and at the same time, the risk of affecting the volumetric energy density due to excessive space occupied by the protrusion is also reduced.

According to some embodiments of the present application, the dimension of the protrusion in the direction perpendicular to the first end face is h, a thickness of the first insulating portion is t, a tensile strength of the first insulating portion is σ, and a dimension of the electrode assembly in the direction perpendicular to the first end face is H, satisfying 1 ≤ H/((σ*t/h) ≤ 10.

In the above solution, by satisfying 1 ≤ H/(σ*t/h) ≤ 10, the dimension H of the electrode assembly in the direction perpendicular to the first end face, the dimension h of the protrusion in the direction perpendicular to the first end face, the thickness t of the first insulating portion, and the tensile strength σ can be defined, and the protrusion can effectively support and lift the electrode assembly, thereby effectively replacing the bottom support plate, so that the battery has higher reliability under the condition of higher gravimetric energy density.

According to some embodiments of the present application, 3 ≤ H/(σ*t/h) ≤ 8 is satisfied.

In the above solution, by defining 3 ≤ H/(σ*t/h) ≤ 8, the protrusion can further effectively support and lift the electrode assembly, thereby effectively replacing the bottom support plate, so that the battery has higher reliability under the condition of higher gravimetric energy density.

According to some embodiments of the present application, the first insulating portion is provided with a through hole, and along a thickness direction of the first insulating portion, a projection of the through hole does not overlap with a projection of the protrusion.

In the above solution, by providing a through hole on the first insulating portion, the through hole can be used to achieve the loading positioning of the insulating member, and the electrolyte can infiltrate the electrode assembly through the through hole, improving the infiltration effect of the electrolyte.

According to some embodiments of the present application, along a length direction of the first insulating portion, an end portion of the first insulating portion is provided with a through hole; and/or, along a width direction of the first insulating portion, an end portion of the first insulating portion is provided with a through hole.

In the above solution, providing a through hole at the end portion in the length direction and/or the width direction of the first insulating portion facilitates the loading positioning of the insulating member, and facilitates the infiltration effect of the electrolyte. Furthermore, compared with providing the through hole in the middle portion of the first insulating portion, providing the through hole at the end portion of the first insulating portion can reduce the impact on the structural strength of the first insulating portion caused by providing the through hole, and improve the supporting effect of the first insulating portion on the electrode assembly, thereby effectively replacing the bottom support plate, so that the battery has higher reliability under the condition of higher gravimetric energy density.

According to some embodiments of the present application, multiple through holes are provided, and the protrusion is provided between two adjacent through holes.

In the above solution, providing multiple through holes can facilitate the infiltration effect of the electrolyte and also facilitate the loading positioning of the insulating member. Additionally, providing the protrusion between two adjacent protrusions can compensate for the loss of structural strength of the first insulating portion caused by providing the through holes, and improve the supporting effect of the first insulating portion on the electrode assembly, thereby effectively replacing the bottom support plate, so that the battery has higher reliability under the condition of higher gravimetric energy density.

In a second aspect, some embodiments of the present application further provide a battery, the battery including the battery cell according to any one of the first aspect.

In a third aspect, some embodiments of the present application further provide an electric apparatus, including the battery cell according to any one of the first aspect, where the battery cell is configured to provide electrical energy.

The above description is only an overview of the technical solutions of the present application. In order to more clearly understand the technical means of the present application, it can be implemented in accordance with the contents of the description, and in order to make the above and other objectives, features, and advantages of the present application more obvious and understandable, specific embodiments of the present application are particularly cited below.

### BRIEF DESCRIPTION OF THE DRAWINGS

In order to more clearly illustrate the technical solutions of the embodiments of the present application, the drawings required to be used in the embodiments will be briefly introduced below. It should be understood that the following drawings only show certain embodiments of the present application, and therefore should not be regarded as limiting the scope. For those of ordinary skill in the art, other related drawings can also be obtained based on these drawings without creative efforts.
FIG. 1 is a schematic structural diagram of a vehicle in some embodiments of the present application;
FIG. 2 is an exploded perspective view of a battery in some embodiments of the present application;
FIG. 3 is an exploded perspective view of a battery cell in some embodiments of the present application;
FIG. 4 is a partial schematic diagram of an internal structure of a battery cell in some embodiments of the present application;
FIG. 5 is a schematic diagram of a partial structure of a housing in some embodiments of the present application;
FIG. 6 is a schematic diagram of a first insulating portion and an electrode assembly in some embodiments of the present application;
FIG. 7 is a schematic diagram of a first insulating portion, an electrode assembly, and a reinforcing member in some other embodiments of the present application;
FIG. 8 is a schematic diagram of an insulating member in some embodiments of the present application;
FIG. 9 is a schematic diagram of an insulating member in some other embodiments of the present application;
FIG. 10 is a schematic diagram of an insulating member in still some other embodiments of the present application.

Reference numerals: 20-battery cell; 21-electrode assembly; 210-first end face; 211-outer peripheral face; 22-insulating member; 220-first insulating portion; 2200-first surface; 2201-second surface; 221-second insulating portion; 23-protrusion; 230-groove; 231-reinforcing member; 24-housing; 240-housing body; 2400-first end wall; 2401-side wall; 241-end cover; 25-electrode terminal; 26-adapter piece; 27-through hole; y-length direction of the first end face; x-width direction of the first end face; z-thickness direction of the first insulating portion; 100-battery; 1000-vehicle; 200-controller; 300-motor; 10-box; 11-first box body; and 12-second box body.

### DETAILED DESCRIPTION OF EMBODIMENTS

In order to make the objectives, technical solutions, and advantages of the embodiments of the present application clearer, the technical solutions in the embodiments of the present application will be clearly described below in conjunction with the drawings in the embodiments of the present application. Obviously, the described embodiments are some embodiments of the present application rather than all embodiments. Based on the embodiments in the present application, all other embodiments obtained by those of ordinary skill in the art without creative efforts fall within the protection scope of the present application.

Unless otherwise defined, all technical and scientific terms used in the present application have the same meaning as commonly understood by those skilled in the technical field to which the present application belongs. The terms used in the description of the present application are only for the purpose of describing specific embodiments and are not intended to limit the present application. The terms "include" and "comprise" and any variations thereof in the description and claims of the present application and the above description of the drawings are intended to cover non-exclusive inclusion. The terms "first", "second", and the like in the description and claims of the present application or the above drawings are used to distinguish different objects, rather than to describe a specific order or primary-secondary relationship.

Reference to "embodiment" in the present application means that a specific feature, structure, or characteristic described in conjunction with the embodiment may be included in at least one embodiment of the present application. The appearance of the phrase in various places in the description does not necessarily refer to the same embodiment, nor is it an independent or alternative embodiment mutually exclusive with other embodiments.

In the description of the present application, it should be noted that, unless otherwise explicitly specified and limited, the terms "mounting", "connection", "join", and "attaching" should be understood in a broad sense, for example, they can be a fixed connection, a detachable connection, or an integral connection; or they can be a direct connection, an indirect connection through an intermediate medium, or a communication between the interiors of two elements. For those of ordinary skill in the art, the specific meanings of the above terms in the present application can be understood according to specific situations.

The term "and/or" in the present application is merely a description of an association relationship of associated objects, indicating that three relationships may exist, for example, A and/or B may indicate the following three cases: A exists alone, A and B exist simultaneously, and B exists alone. In addition, the character "/" in the present application generally indicates that the contextually associated objects are in an "or" relationship.

In the embodiments of the present application, the same reference numerals denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated apparatus, are only exemplary descriptions and should not constitute any limitation to the present application.

"Multiple" appearing in the present application refers to two or more (including two).

In the present application, a battery cell may include a lithium-ion battery cell, a lithium-sulfur battery cell, a sodium-lithium-ion battery cell, a sodium-ion battery cell, a magnesium-ion battery cell, or the like, which is not limited in the embodiments of the present application. The battery cell may be in the shape of a cylinder, a flat body, a rectangular body, or other shapes, which is also not limited in the embodiments of the present application.

The battery mentioned in the embodiments of the present application refers to a single physical module including one or more battery cells to provide higher voltage and capacity. The battery generally includes a box for encapsulating one or more battery cells. The box can prevent liquid or other foreign matter from affecting the charging or discharging of the battery cells.

The battery cell includes a housing, an electrode assembly, and an electrolyte, and the electrode assembly is disposed inside the housing. The electrode assembly includes a positive electrode plate, a negative electrode plate, and a separator. The battery cell mainly works by the movement of metal ions between the positive electrode plate and the negative electrode plate. The positive electrode plate includes a positive electrode current collector and a positive electrode active substance layer, the positive electrode active substance layer is applied to the surface of the positive electrode current collector, the positive electrode current collector uncoated with the positive electrode active substance layer protrudes from the positive electrode current collector coated with the positive electrode active substance layer, and the positive electrode current collector uncoated with the positive electrode active substance layer serves as a positive electrode tab. Taking a lithium-ion battery as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer, the negative electrode active substance layer is applied to the surface of the negative electrode current collector, the negative electrode current collector uncoated with the negative electrode active substance layer protrudes from the negative electrode current collector coated with the negative electrode active substance layer, and the negative electrode current collector uncoated with the negative electrode active substance layer serves as a negative electrode tab. The material of the negative electrode current collector may be copper, and the negative electrode active substance may be carbon, silicon, or the like. The material of the separator may be PP (polypropylene, polypropylene) or PE (polyethylene, polyethylene), or the like. The separator has electronic insulation to isolate adjacent positive electrode plates and negative electrode plates to prevent short circuit between adjacent positive electrode plates and negative electrode plates. The separator has a large number of through micropores, which can ensure free passage of electrolyte ions and has good permeability to lithium ions.

The battery cell further includes an insulating member, and the insulating member covers the electrode assembly and can insulate and isolate the housing and the electrode assembly. In some embodiments, the insulating member may be an insulating film, a Mylar film, or the like.

In some embodiments, the electrode terminal has a first end face and an outer peripheral face surrounding the edge of the first end face. The insulating member may include a first insulating portion covering the first end face, and a second insulating portion covering the outer peripheral face.

In the development of battery technology, how to increase the energy density of batteries is a technical problem that needs to be solved urgently in battery technology.

In current battery cells, such as square battery cells, the housing includes a first end wall and a side wall surrounding the first end wall, and an inner surface of the side wall and an inner surface of the first end wall are connected by a fillet transition (those skilled in the art often refer to this fillet as an inner R angle). In order to reduce the risk of damage to the electrode assembly caused by interference between the electrode assembly and the fillet, a bottom support plate is often provided between the electrode terminal and the first end wall to support and lift the electrode assembly. However, the provision of the bottom support plate increases the weight of the battery, resulting in a decrease in the gravimetric energy density of the battery.

In view of this, in order to alleviate the problem of reduced gravimetric energy density of the battery caused by the provision of the bottom support plate, some embodiments of the present application provide a battery cell, the battery cell including an electrode assembly and an insulating member. The insulating member includes a first insulating portion and a second insulating portion connected to each other, the first insulating portion covering a first end face of the electrode assembly, and the second insulating portion covering an outer peripheral face of the electrode assembly. The first insulating portion has a first surface facing away from the first end face and a second surface facing the first end face, and the first surface and/or the second surface is provided with a protrusion.

In the above solution, providing a protrusion on the first surface and/or the second surface can replace the bottom support plate of the current battery cell, support the electrode assembly, and lift the electrode assembly with the protrusion, so as to reduce the risk of interference between the fillet between the first end wall and the side wall of the housing and the electrode assembly causing damage to the electrode assembly. Since the protrusion can replace the bottom support plate, the weight of the bottom support plate itself can be reduced, thereby effectively reducing the weight of the battery cell, and further increasing the gravimetric energy density of the battery.

The battery cell disclosed in the embodiments of the present application may be used in, but is not limited to, electric apparatuses such as vehicles, ships, or aircraft. The power system of the electric apparatus may be formed by the battery cell, battery, or the like disclosed in the present application.

The embodiments of the present application provide an electric apparatus using a battery as a power source, and the electric apparatus can be, but is not limited to, a mobile phone, a tablet, a laptop, an electric toy, an electric tool, an electric bicycle, an electric car, a ship, and an aircraft. The electric toy can include a fixed or mobile electric toy, such as a game console, an electric car toy, an electric ship toy, or an electric airplane toy, and the aircraft can include an airplane, a rocket, a space shuttle, a spacecraft, or the like.

For convenience of description, the following embodiments take an electric apparatus according to an embodiment of the present application as a vehicle as an example for description.

Referring to the drawings, the drawings are schematic structural diagrams of a vehicle in some embodiments of the present application. The vehicle may be a fuel vehicle, a gas vehicle, or a new energy vehicle, and the new energy vehicle may be a pure electric vehicle, a hybrid vehicle, an extended-range vehicle, or the like. The interior of the vehicle is provided with a battery, and the battery can be provided at the bottom of the vehicle, or at the head of the vehicle 1000, or at the tail of the vehicle 1000. The battery 100 can be used for power supply of the vehicle 1000, for example, the battery 100 can serve as an operating power source or a use power source of the vehicle 1000. The vehicle 1000 may further include a controller 200 and a motor 300, and the controller 200 is used to control the battery 100 to supply power to the motor 300, for example, for working power requirements during starting, navigation, and driving of the vehicle 1000.

In some embodiments of the present application, the battery 100 can not only serve as an operating power source or a use power source of the vehicle 1000, but also serve as a driving power source of the vehicle 1000, replacing or partially replacing fuel or natural gas to provide driving power for the vehicle 1000.

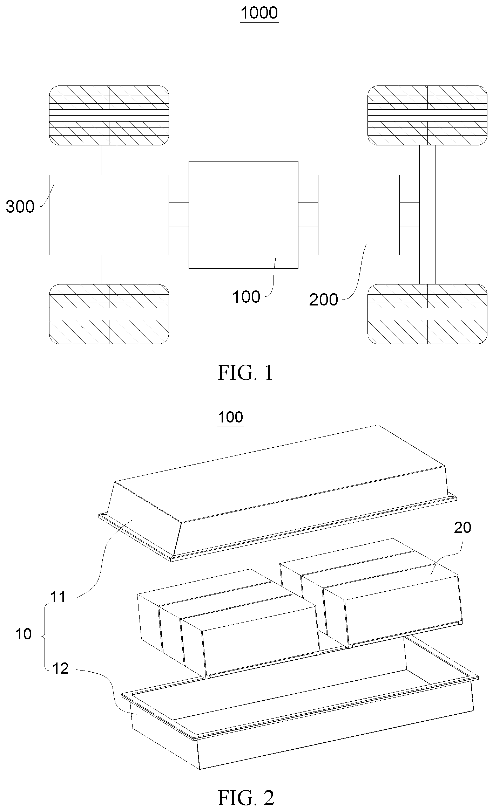

Referring to FIG. 2, FIG. 2 is an exploded perspective view of a battery 100 in some embodiments of the present application, the battery 100 includes a box 10 and battery cells 20, and the battery cells 20 are accommodated in the box 10.

The box 10 is used to provide an assembly space for the battery cells 20, and the box 10 can adopt various structures. In some embodiments, the box 10 may include a first box body 11 and a second box body 12, the first box body 11 and the second box body 12 cover each other, and the first box body 11 and the second box body 12 jointly define an assembly space for accommodating the battery cells 20. The second box body 12 may be a hollow structure with one end open, the first box body 11 may be a plate-shaped structure, and the first box body 11 covers the open side of the second box body 12, so that the first box body 11 and the second box body 12 jointly define the assembly space. The first box body 11 and the second box body 12 may also both be hollow structures with one side open, and the open side of the first box body 11 covers the open side of the second box body 12.

Certainly, the box 10 formed by the first box body 11 and the second box body 12 can be in various shapes, such as a cylinder, a cuboid, or a cube. Exemplarily, in FIG. 2, the shape of the box 10 is a cuboid.

In the battery 100, one or more battery cells 20 may be provided in the box 10. When multiple battery cells 20 are provided in the box 10, the multiple battery cells 20 may be connected in series or in parallel or in a mixed connection, and the mixed connection means that the multiple battery cells 20 have both series and parallel connections. The multiple battery cells 20 can be directly connected in series or in parallel or in a mixed connection, and then the entirety formed by the multiple battery cells 20 is accommodated in the box 10. Certainly, the battery 100 can also be in the form of multiple battery cells 20 first connected in series or in parallel or in a mixed connection to form a battery module, and then multiple battery modules are connected in series or in parallel or in a mixed connection to form a whole, and the whole is accommodated in the box 10.

In some embodiments, the battery 100 may further include other structures, for example, the battery 100 may further include a bus component, and the bus component is used to connect multiple battery cells 20 to achieve electrical connection between the multiple battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the shape of a cylinder, a prism, or other shapes.

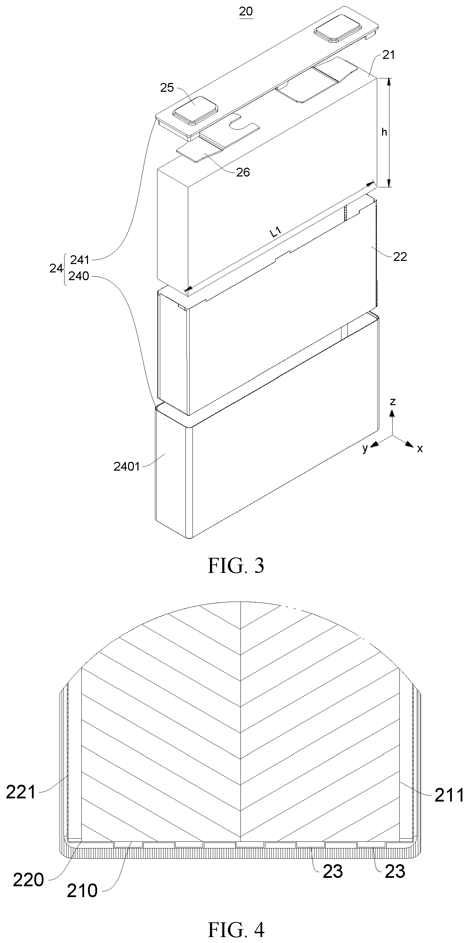

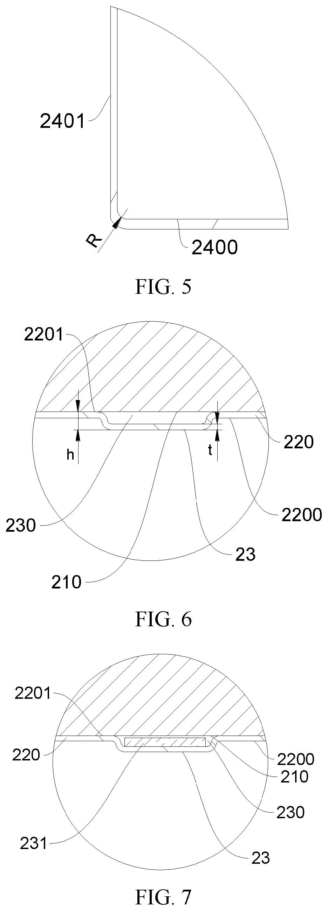

Some embodiments of the present application provide a battery cell 20. Referring to FIGs. 3 to 6, FIG. 3 is an exploded perspective view of a battery cell 20 in some embodiments of the present application, FIG. 4 is a partial schematic diagram of an internal structure of a battery cell 20 in some embodiments of the present application, FIG. 5 is a schematic diagram of a partial structure of a housing 24 in some embodiments of the present application, and FIG. 6 is a schematic diagram of a first insulating portion 220 and an electrode assembly 21 in some embodiments of the present application.

The battery cell 20 includes an electrode assembly 21 and an insulating member 22. The insulating member 22 includes a first insulating portion 220 and a second insulating portion 221 connected to each other, the first insulating portion 220 covers a first end face 210 of the electrode assembly 21, and the second insulating portion 221 covers an outer peripheral face 211 of the electrode assembly 21. The first insulating portion 220 has a first surface 2200 facing away from the first end face 210 and a second surface 2201 facing the first end face 210, and the first surface 2200 and/or the second surface 2201 is provided with a protrusion 23.

The battery cell 20 includes a housing 24, the housing 24 is used to accommodate the electrode assembly 21, and the housing 24 can also be used to accommodate an electrolyte, such as a liquid electrolyte. Referring to FIG. 3, in some embodiments, the housing 24 includes a housing body 240 and an end cover 241. The interior of the housing body 240 is formed with an accommodating cavity, and the accommodating cavity is used for accommodating the electrode assembly 21. The housing body 240 has an opening communicating with the accommodating cavity, and the end cover 241 covers the opening of the housing body 240 and forms a sealed connection to form a sealed space for accommodating the electrode assembly 21 and the electrolyte.

The housing body 240 includes a side wall 2401 and a first end wall 2400, the first end wall 2400 is disposed opposite to the end cover 241, and the side wall 2401 is disposed around an edge of the first end wall 2400 to jointly form the accommodating cavity with the first end wall 2400. Referring to FIG. 5, an inner surface of the side wall 2401 and an inner surface of the first end wall 2400 are connected by a fillet transition, that is, there is an inner R angle between them. In some embodiments, the first end wall 2400 is the bottom wall of the housing 24.

In some embodiments, the material of the housing 24 may be metal or a combination of metal and non-metal. For example, the housing 24 may be made of metal, such as aluminum, copper, iron, steel, or aluminum alloy. For another example, part of the housing 24 may be made of metal, and the remaining part may be made of non-metal; for example, the end cover 241 of the housing 24 may be made of metal, and the housing body 240 or other parts of the housing 24 may be made of non-metal materials.

The housing 24 can be in various shapes, such as a cylinder or a prismatic structure. The shape of the housing 24 can be determined according to the specific shape of the electrode assembly 21. For example, if the electrode assembly 21 is of a cylindrical structure, a housing 24 being of a cylindrical structure can be selected; if the electrode assembly 21 is a square electrode assembly, a square housing 24 can be selected.

The electrode assembly 21 is a component in the battery cell 20 where electrochemical reactions take place. The structure of the electrode assembly 21 can be various, exemplarily, the electrode assembly 21 can be a wound structure formed by winding electrode plates and a separator, and the main body portion of the electrode assembly 21 is cylindrical. The electrode plates include a first electrode plate and a second electrode plate with opposite polarities, and the first electrode plate and the second electrode plate can be isolated by the separator. The main material of the separator can be selected from at least one of glass fiber, non-woven fabric, polyethylene, polypropylene, and polyvinylidene fluoride. The tabs of the electrode assembly 21 can include a first tab and a second tab with opposite polarities. In some embodiments, the tabs of the electrode assembly 21 can be connected to electrode terminals 25 through adapter pieces 26 to achieve output or input of current.

Referring to FIGs. 3 and 6, the electrode assembly 21 includes a first end face 210 and an outer peripheral face 211, the first end face 210 may be the surface of the electrode assembly 21 facing the first end wall 2400 of the housing 24, and the outer peripheral face 211 is the portion surrounding the edge of the first end face 210. The tabs of the electrode assembly 21 may be located on a second end face, and the second end face may be disposed opposite to the first end face 210.

The insulating member 22 is a component for covering the outer surface of the electrode assembly 21. The insulating member 22 can be made of a material with insulating properties, such as polyethylene, polypropylene, or polyethylene terephthalate. In some embodiments, the insulating member 22 may be an insulating film with a small thickness. In some embodiments, the insulating member 22 covers the outer surface of the electrode assembly 21, and an adhesive layer or adhesive may be provided between the insulating member 22 and the electrode assembly 21.

In some embodiments, the insulating member 22 can cover at least part of the first end face 210 and the outer peripheral face 211 of the electrode assembly 21. The insulating member 22 includes a first insulating portion 220 and a second insulating portion 221 connected to each other, and the first insulating portion 220 and the second insulating portion 221 may be integrally manufactured, or may be components that are independent of each other and connected by adhesion, welding, or connecting members.

The first insulating portion 220 is used to cover the first end face 210 of the electrode assembly 21, and it can be used to insulate and isolate the first end face 210 and the first end wall 2400. The second insulating portion 221 is used to cover the outer peripheral face 211 of the electrode assembly 21, and is used to insulate and isolate the outer peripheral face 211 of the electrode assembly 21 and the side wall 2401 of the housing 24.

The first insulating portion 220 can be used to support the electrode assembly 21, which can be understood that the gravity of the electrode assembly 21 can act on the first insulating portion 20, and the first insulating portion 20 can support the electrode assembly 21. For example, when the battery cell 20 is placed vertically, the first end face 210 is the lowest portion of the electrode assembly 21, and the first insulating portion 220 is below the entire electrode assembly 21 to overcome the gravity of the electrode assembly 21 and support the electrode assembly 21.

Referring to FIG. 6, the first insulating portion 220 has a first surface 2200 and a second surface 2201 disposed opposite to each other, and the first surface 2200 is farther away from the first end face 210 than the second surface 2201, meaning that the first surface 2200 is the outer surface of the first insulating portion 220. The second surface 2201 is closer to the first end face 210 than the first surface 2200, meaning that the second surface 2201 is the inner surface of the first insulating portion 220.

"The first surface 2200 and/or the second surface 2201 is provided with a protrusion 23" can be understood as, in some embodiments, the first surface 2200 is provided with a protrusion 23, the protrusion 23 protruding in the direction from the second surface 2201 toward the first surface 2200. In some other embodiments, the second surface 2201 is provided with a protrusion 23, the protrusion 23 protruding in the direction from the first surface 2200 toward the second surface 2201. In still some other embodiments, the first surface 2200 is provided with a protrusion 23, the protrusion 23 protruding in the direction from the second surface 2201 toward the first surface 2200, and at the same time, the second surface 2201 is also provided with a protrusion 23, the protrusion 23 protruding in the direction from the first surface 2200 toward the second surface 2201.

In some embodiments, the material of the protrusion 23 may be the same as or different from the material of the first insulating portion 220. In some embodiments, the protrusion 23 may be connected to the first insulating portion 220 by adhesion, welding, or a connecting member. In some embodiments, the protrusion 23 may be integrally formed with the first insulating portion 220.

In the above solution, providing a protrusion 23 on the first surface 2200 and/or the second surface 2201 can replace the bottom support plate of the current battery cell 20, support the electrode assembly 21, and lift the electrode assembly 21 with the protrusion 23, so as to reduce the risk of interference between the fillet between the first end wall 2400 and the side wall 2401 of the housing 24 and the electrode assembly 21 causing damage to the electrode assembly 21. Since the protrusion 23 can replace the bottom support plate, the weight of the bottom support plate itself can be reduced, thereby effectively reducing the weight of the battery cell 20, and further increasing the gravimetric energy density of the battery.

According to some embodiments of the present application, referring to FIG. 6, the first surface 2200 is provided with a protrusion 23, and the second surface 2201 is provided with a groove 230 at a position corresponding to the protrusion 23.

In some other embodiments, the second surface 2201 is provided with a protrusion 23, and the first surface 2200 is provided with a groove 230 at a position corresponding to the protrusion 23.

The groove 230 is a portion corresponding to the protrusion 23, for example, a protrusion protruding in the direction from the second surface 2201 toward the first surface 2200 is provided on the first surface 2200, and at a position corresponding to the protrusion 23, the second surface 2201 may be provided with a groove 230 recessed in the direction from the second surface 2201 toward the first surface 2200. For another example, a protrusion protruding in the direction from the first surface 2200 toward the second surface 2201 is provided on the second surface 2201, and at a position corresponding to the protrusion 23, the first surface 2200 may be provided with a groove 230 recessed in the direction from the first surface 2200 toward the second surface 2201.

In some embodiments, the protrusion 23 can be formed on the first insulating portion 220 by stamping. In some other embodiments, the groove 230 can be formed on the first insulating portion 220 by grooving.

In the above solution, by providing a groove 230 on the other side of the first insulating portion 220 corresponding to the protrusion 23, as compared with the solution of directly providing the protrusion 23 on the first insulating portion 220, the weight increase caused by providing the protrusion 23 can be effectively reduced, so that the battery has a higher gravimetric energy density.

According to some embodiments of the present application, a reinforcing member 231 is provided in the groove 230.

The reinforcing member 231 is a component provided in the groove 230. The function of the reinforcing member 231 may include enhancing the structural strength of the first insulating portion 220 and reducing the risk of collapse of the protrusion 23 under the pressure of the electrode assembly 21.

In some embodiments, the reinforcing member 231 may be a reinforcing rib or a reinforcing bar provided on the groove wall of the groove 230. The reinforcing member 231 may be integrally formed with the first insulating portion 220, or the reinforcing member 231 may be connected to the first insulating portion 220 by welding, adhesion, or the like. In some embodiments, the reinforcing member 231 may be a filler provided in the groove 230. The filler may fill up or not fill up the groove 230. In some embodiments, the reinforcing member 231 may be a coating provided on the inner surface of the groove 230.

In the above solution, by providing a reinforcing member 231 in the groove 230, the structural strength of the first insulating portion 220 can be enhanced, the supporting function of the protrusion 23 for the electrode assembly 21 can be improved, and the risk of collapse of the protrusion 23 due to the weight of the electrode assembly 21 can be reduced, thereby effectively replacing the bottom support plate, so that the battery has higher reliability under the condition of higher gravimetric energy density.

According to some other embodiments of the present application, referring to FIG. 7, FIG. 7 is a schematic diagram of a first insulating portion 220, an electrode assembly 21, and a reinforcing member 231 in some other embodiments of the present application. The reinforcing member 231 includes a filler provided in the groove 230.

The filler may be a component provided in the groove 230 to enhance the structural strength of the first insulating member 22.

The filler may fill up the groove 230, for example, the space between the electrode assembly 21 and the groove 230 is filled up with the filler. The filler may also not fill up the groove 230, for example, when the filler is provided, there is a gap between the electrode assembly 21, the groove 230, and the filler. In some embodiments, one end of the filler may be in contact with the first end wall 2400, and the other end of the filler may be in contact with the bottom of the groove 230.

In some embodiments, the filler may be a light-weight porous structure, for example, the filler may be sponge, which can improve the supporting function of the protrusion 23 for the electrode assembly 21 while also improving the infiltration effect of the electrolyte.

In the above solution, by providing a filler inside the groove 230, the structural strength of the first insulating portion 220 can be enhanced, the supporting function of the protrusion 23 for the electrode assembly 21 can be improved, and the risk of collapse of the protrusion 23 due to the weight of the electrode assembly 21 can be reduced, so that the battery has higher reliability. In some embodiments, the filler may be a porous structure, such as sponge, and by providing sponge in the groove 230, the supporting effect of the protrusion 23 on the electrode assembly 21 can be improved, and more electrolyte can perform infiltration, which facilitates improvement of battery charge and discharge performance.

According to some embodiments of the present application, the reinforcing member 231 includes a coating applied to the inner surface of the groove 230.

The coating may be a component applied to the surface of the groove wall of the groove 230 to enhance the structural strength of the first insulating member 22.

Exemplarily, in some embodiments, a protrusion 23 is formed on the first surface 2200, a groove 230 is formed on the second surface 2201, paint can be applied to the second surface 2201, and after drying, a coating can be formed. In some embodiments, the coating may be an insulating coating.

In the above solution, by providing a coating on the inner surface of the groove 230, the collapse resistance ability of the protrusion 23 can be improved, and the protrusion 23 effectively supports the electrode assembly 21, thereby effectively replacing the bottom support plate, so that the battery has higher reliability under the condition of higher gravimetric energy density.

In some embodiments, the reinforcing member 231 may include a filler and a coating, that is, a coating is provided on the inner surface of the groove 230, and a filler is provided in the groove 230.

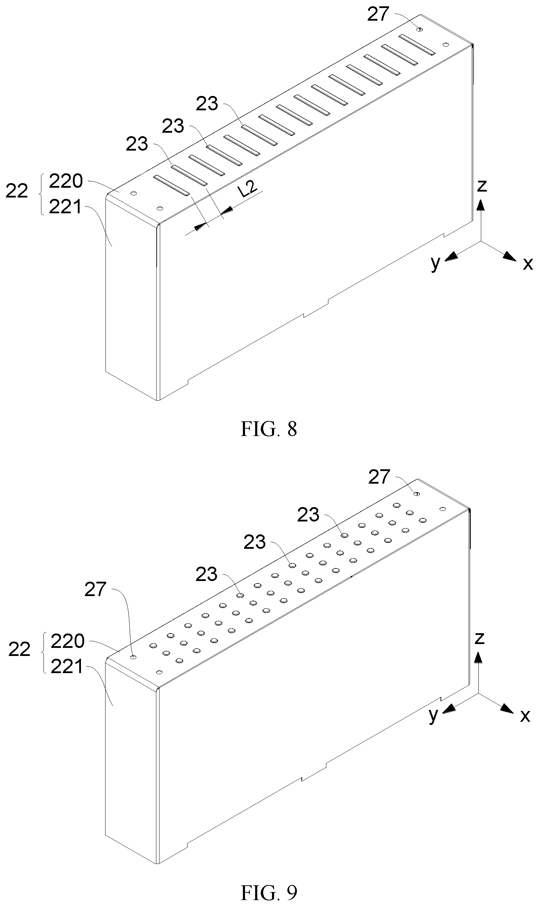

According to some embodiments of the present application, referring to FIGs. 8 and 9, FIG. 8 is a schematic diagram of an insulating member 22 in some embodiments of the present application, and FIG. 9 is a schematic diagram of an insulating member 22 in some other embodiments of the present application. Multiple protrusions 23 are provided, and the multiple protrusions 23 are spaced apart.

In some embodiments, the number of the protrusions 23 may be multiple, for example, two, three, four, five, six, or more.

Two adjacent protrusions 23 are spaced apart. The spacing between the protrusions 23 may be the same or different.

In some embodiments, referring to FIGs. 8 and 9, the first end face 210 may be rectangular, and the multiple protrusions 23 may be spaced apart along the length direction y of the first end face. Referring to FIG. 9, the first end face 210 may be rectangular, and the multiple protrusions 23 may be spaced apart along the width direction x of the first end face.

In the above solution, by providing multiple protrusions 23 to jointly support the electrode assembly 21, the risk of interference between the electrode assembly 21 and the housing 24 can be effectively reduced, so that the protrusions 23 can effectively replace the bottom support plate, and the battery has higher reliability under the condition of higher gravimetric energy density.

According to some embodiments of the present application, the protrusion 23 is a circular protrusion, an elliptical protrusion, or a strip-shaped protrusion.

In some embodiments, the protrusions 23 on the first insulating portion 220 may be circular, elliptical, or strip-shaped. For example, in some embodiments, the first insulating portion 220 has multiple protrusions 23, some protrusions 23 are circular, some protrusions 23 are elliptical, and the remaining protrusions 23 are strip-shaped.

Referring to FIG. 8, the first surface 2200 is provided with multiple protrusions 23, and each protrusion 23 is a strip-shaped protrusion. Referring to FIG. 9, the first surface 2200 is provided with multiple protrusions 23, and each protrusion 23 is a circular protrusion.

In the above solution, the shape of the protrusion 23 can be diversified to reduce the difficulty in processing the protrusion 23 and improve the manufacturing efficiency of the battery.

According to some embodiments of the present application, the protrusion 23 is a strip-shaped protrusion 23, a length direction of the protrusion 23 is parallel to a width direction x of the first end face, and a width direction of the protrusion 23 is parallel to a length direction y of the first end face.

In some embodiments, the first end face 210 may be rectangular, and the protrusion 23 may be a strip-shaped protrusion 23. The length direction of the protrusion 23 is parallel to the width direction x of the first end face, and the width direction of the protrusion 23 is parallel to the length direction y of the first end face. In some embodiments, the multiple protrusions 23 may be spaced apart along the length direction y of the first end face. In some other embodiments, the multiple protrusions 23 may be spaced apart along the width direction x of the first end face.

In the above solution, by defining the protrusion 23 as a strip-shaped protrusion 23, and defining the length direction of the protrusion 23 as parallel to the width direction x of the first end face, the protrusion 23 can effectively support the electrode assembly 21, so that the battery has higher reliability under the condition of higher gravimetric energy density.

According to some embodiments of the present application, the multiple protrusions 23 are spaced apart along the length direction y of the first end face.

In the above solution, by defining the multiple protrusions 23 as being spaced apart along the length direction y of the first end face, the multiple strip-shaped protrusions 23 can jointly and effectively support the electrode assembly 21, so that the battery has higher reliability under the condition of higher gravimetric energy density.

According to some embodiments of the present application, referring to FIGs. 3 and 8, a maximum length of the first end face 210 is L1, and a minimum spacing between two adjacent protrusions 23 is L2, satisfying L1/100 ≤ L2 ≤ L1/2.

In FIG. 1, the position corresponding to the maximum length L1 of the first end face 210 is exemplarily shown through the first insulating portion 220, and in FIG. 8, the position of the minimum spacing L2 between two adjacent protrusions 23 is exemplarily shown.

In some embodiments, the electrode assembly 21 is square, its first end face 210 may be rectangular, and the dimension of the edge in the length direction may be its maximum length L1. In some embodiments, the protrusions 23 are evenly spaced, and the spacing between any two adjacent protrusions 23 may be the minimum spacing L2. Exemplarily, in some embodiments, the protrusions 23 are spaced apart along the length direction y of the first end face, and along the length direction y of the first end face, the minimum spacing between two adjacent protrusions 23 may be L2.

In some embodiments, the value range of L2 may be between L1/100 and L1/2, for example, L2 may be L1/100, L1/99, L1/98, L1/97, ..., L1/5, L1/6, L1/5, L1/4, L1/3, or L1/2.

In the above solution, by defining the minimum spacing L2 between two adjacent protrusions 23 by the maximum length L1 of the first end face 210, L1 and L2 satisfy L1/100 ≤ L2 ≤ L1/2, and the multiple protrusions 23 can effectively support the electrode assembly 21, so that the battery has higher reliability under the condition of higher gravimetric energy density.

According to some embodiments of the present application, referring to FIGs. 5 and 6, the battery cell 20 further includes a housing 24, and the electrode assembly 21 is disposed in the housing 24. A dimension of the protrusion 23 in a direction perpendicular to the first end face 210 is h. The housing 24 includes a first end wall 2400 and a side wall 2401, the first end face 210 is disposed opposite to the first end wall 2400, the side wall 2401 is disposed around the edge of the first end wall 2400, the inner surface of the side wall 2401 and the inner surface of the first end wall 2400 are connected by a fillet transition, and the radius of the fillet is R, satisfying R/10 ≤ h ≤ 2R.

"A dimension of the protrusion 23 in a direction perpendicular to the first end face 210 is h" can be understood as the height by which the protrusion 23 lifts the electrode assembly 21 is h.

In some embodiments, the value range of R may be between R/10 and 2R. For example, R may be R/10, R/9, R/8, R/7, R/6, ..., 1.7R, 1.8R, 1.9R, or 2R.

In the above solution, the dimension h of the protrusion 23 in the direction perpendicular to the first end face 210 can be regarded as the dimension by which the electrode assembly 21 is lifted by the protrusion 23, and by defining the dimension h of the protrusion 23 in the direction perpendicular to the first end face 210 and the radius R of the fillet between the inner surface of the side wall 2401 and the inner surface of the first end wall 2400 as satisfying R/10 ≤ h ≤ 2R, the protrusion 23 can replace the bottom support plate to effectively perform the lifting function for the electrode assembly 21, so as to reduce the risk of interference between the electrode assembly 21 and the housing 24 of the battery cell 20 causing damage to the electrode assembly 21, so that the battery has higher reliability.

According to some embodiments of the present application, 3R/10 ≤ h ≤ R is satisfied.

In some embodiments, the value range of R may be between 3R/10 and R, for example, R may be 3R/10, 4R/10, 5R/10, 6R/10, 7R/10, 8R/10R, 9R/10R, or R.

In the above solution, by defining h as 3R/10 ≤ h ≤ R, the electrode assembly 21 can be effectively lifted to reduce the risk of interference between the electrode assembly 21 and the housing 24 of the battery cell 20 causing damage to the electrode assembly 21, and at the same time, the risk of affecting the volumetric energy density due to excessive space occupied by the protrusion 23 is also reduced.

In some embodiments, the dimension of the protrusion 23 in the direction perpendicular to the first end face 210 is h, a thickness of the first insulating portion 220 is t, a tensile strength of the first insulating portion 220 is σ, and a dimension of the electrode assembly 21 in the direction perpendicular to the first end face 210 is H, satisfying 1 ≤ H/(σ*t/h) ≤ 10.

In some embodiments, the value of H/(σ*t/h) may be 1, 2, 3, 4, 5, 6, 7, 8, 9, 10, or any value between two adjacent values.

Under the same material, a greater thickness t of the first insulating portion 220 indicates greater strength of the first insulating portion 220 and a better supporting effect on the electrode assembly 21. Greater tensile strength σ of the first insulating portion 220 indicates greater strength of the first insulating portion 220 and a better supporting effect on the electrode assembly 21.

A greater dimension H of the electrode assembly 21 in the direction perpendicular to the first end face 210 indicates a greater weight of the electrode assembly 21 under the same material and greater pressure on the first insulating portion 220.

In the above solution, by satisfying 1 ≤ H/(σ*t/h) ≤ 10, the dimension H of the electrode assembly 21 in the direction perpendicular to the first end face 210, the dimension h of the protrusion 23 in the direction perpendicular to the first end face 210, the thickness t of the first insulating portion 220, and the tensile strength σ can be defined, and the protrusion 23 can effectively support and lift the electrode assembly 21, thereby effectively replacing the bottom support plate, so that the battery has higher reliability under the condition of higher gravimetric energy density.

According to some embodiments of the present application, 3 ≤ H/(σ*t/h) ≤ 8 is satisfied.

In some embodiments, the value of H/(σ*t/h) may be 3, 4, 5, 6, 7, 8, or any value between two adjacent values.

In the above solution, by satisfying 3 ≤ H/(σ*t/h) ≤ 8, the dimension H of the electrode assembly 21 in the direction perpendicular to the first end face 210, the dimension h of the protrusion 23 in the direction perpendicular to the first end face 210, the thickness t of the first insulating portion 220, and the tensile strength σ can be defined, and the protrusion 23 can further effectively support and lift the electrode assembly 21, thereby effectively replacing the bottom support plate, so that the battery has higher reliability under the condition of higher gravimetric energy density.

According to some embodiments of the present application, referring to FIGs. 8 and 9, the first insulating portion 220 is provided with a through hole 27, and along a thickness direction z of the first insulating portion, a projection of the through hole 27 does not overlap with a projection of the protrusion 23.

Along the thickness direction z of the first insulating portion, the through hole 27 may penetrate the first insulating portion 220. In some embodiments, the through hole 27 may be spaced apart from the protrusion 23.

In the above solution, by providing a through hole 27 on the first insulating portion 220, the through hole 27 can be used to achieve the loading positioning of the insulating member 22, and the electrolyte can infiltrate the electrode assembly through the through hole, improving the infiltration effect of the electrolyte.

In some other embodiments, the through hole 27 may be formed in the protrusion 23.

According to some embodiments of the present application, along a length direction of the first insulating portion 220, an end portion of the first insulating portion 220 is provided with a through hole 27; and/or, along a width direction of the first insulating portion 220, an end portion of the first insulating portion 220 is provided with a through hole 27.

In some embodiments, along the length direction of the first insulating portion 220, the end portion of the first insulating portion 220 is provided with a through hole 27. In some embodiments, along the width direction of the first insulating portion 220, the end portion of the first insulating portion 220 is provided with a through hole 27. In some embodiments, along the length direction of the first insulating portion 220, the end portion of the first insulating portion 220 is provided with a through hole 27, and along the width direction of the first insulating portion 220, the end portion of the first insulating portion 220 is also provided with a through hole 27.

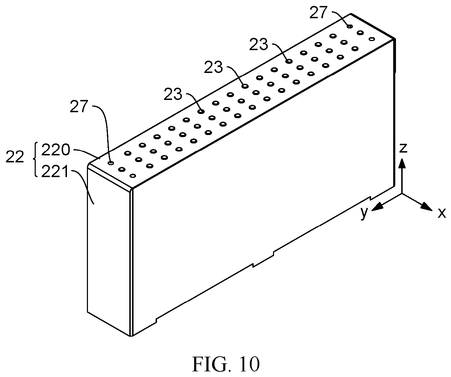

Referring to FIG. 9 or FIG. 10, along the length direction of the first insulating portion 220, both ends of the first insulating portion 220 are provided with through holes 27, each end is provided with two through holes 27, and the two through holes 27 are spaced apart along the width direction of the first insulating portion 220.

In the above solution, providing a through hole 27 at the end portion in the length direction and/or the width direction of the first insulating portion 220 facilitates the loading positioning of the insulating member 22, and facilitates the infiltration effect of the electrolyte. Furthermore, compared with providing the through hole 27 in the middle portion of the first insulating portion 220, providing the through hole 27 at the end portion of the first insulating portion 220 can reduce the impact on the structural strength of the first insulating portion 220 caused by providing the through hole 27, and improve the supporting effect of the first insulating portion 220 on the electrode assembly 21, thereby effectively replacing the bottom support plate, so that the battery has higher reliability under the condition of higher gravimetric energy density.

According to some other embodiments of the present application, referring to FIG. 10, FIG. 10 is a schematic diagram of an insulating member in still some other embodiments of the present application. Multiple through holes 27 are provided, and a protrusion 23 is provided between two adjacent through holes 27.

In some embodiments, the first insulating portion 220 is provided with multiple through holes 27, for example, in FIG. 10, along the length direction of the first insulating portion 220, both ends of the first insulating portion 220 are provided with through holes 27, each end is provided with two through holes 27, and the two through holes 27 are spaced apart along the width direction of the first insulating portion 220.

In the above solution, providing multiple through holes 27 can facilitate the infiltration effect of the electrolyte and also facilitate the loading positioning of the insulating member 22. Additionally, providing a protrusion 23 between two adjacent protrusions 23 can compensate for the loss of structural strength of the first insulating portion 220 caused by providing the through holes 27, and improve the supporting effect of the first insulating portion 220 on the electrode assembly 21, thereby effectively replacing the bottom support plate, so that the battery has higher reliability under the condition of higher gravimetric energy density.

Some embodiments of the present application further provide a battery, the battery including the battery cell 20 provided above.

Some embodiments of the present application further provide an electric apparatus, the electric apparatus including the battery cell 20 provided above. The battery cell 20 is configured to provide electrical energy.

The present application further provides a battery cell 20, referring to FIGs. 3 to 9.

The battery cell 20 includes a housing 24, an electrode assembly 21, and an insulating member 22. The housing 24 includes a side wall 2401 and a first end wall 2400, and the first end wall 2400 may be the bottom wall of the housing 24. The electrode assembly 21 is disposed inside the housing 24. The insulating member 22 covers the electrode assembly 21.

The insulating member 22 includes a first insulating portion 220 and a second insulating portion 221 connected to each other, the first insulating portion 220 covers a first end face 210 of the electrode assembly 21, and the second insulating portion 221 covers an outer peripheral face 211 of the electrode assembly 21. The first end face 210 of the electrode assembly 21 may be the bottom face of the electrode assembly 21.

The first insulating portion 220 has a first surface 2200 and a second surface 2201 disposed opposite to each other, and the second surface 2201 may be attached to the first end face 210. The first surface 2200 is provided with a protrusion 23, and the second surface 2201 is provided with a groove 230 at a position corresponding to the protrusion 23. The shape of the protrusion 23 may be strip-shaped, circular, or elliptical.

The function of the protrusion 23 includes supporting the electrode assembly 21 and lifting the electrode assembly 21. The protrusion 23 can replace the bottom support plate in the current battery cell 20 to achieve the purpose of reducing weight and increasing the gravimetric energy density of the battery cell 20.

Referring to FIGs. 8 and 9, multiple protrusions 23 are spaced apart, can jointly support the electrode assembly 21, and lift the electrode assembly 21, so as to reduce the risk of interference between the fillet between the first end wall 2400 and the side wall 2401 of the housing 24 and the electrode assembly 21 causing damage to the electrode assembly 21.

The above are only preferred embodiments of the present application and are not intended to limit the present application. For those skilled in the art, the present application can have various modifications and changes. Any modification, equivalent replacement, improvement, and the like made within the spirit and principle of the present application should be included in the protection scope of the present application.

## Claims

1. A battery cell, comprising:
an electrode assembly; and
an insulating member, comprising a first insulating portion and a second insulating portion connected to each other, wherein the first insulating portion covers a first end face of the electrode assembly, and the second insulating portion covers an outer peripheral face of the electrode assembly;
wherein the first insulating portion has a first surface facing away from the first end face and a second surface facing the first end face, and the first surface and/or the second surface is provided with a protrusion.

2. The battery cell according to claim 1, wherein the first surface is provided with the protrusion, and the second surface is provided with a groove at a position corresponding to the protrusion;
or, the second surface is provided with the protrusion, and the first surface is provided with a groove at a position corresponding to the protrusion.

3. The battery cell according to claim 2, wherein a reinforcing member is provided in the groove.

4. The battery cell according to claim 3, wherein the reinforcing member comprises a filler provided in the groove.

5. The battery cell according to claim 3 or 4, wherein the reinforcing member comprises a coating applied to an inner surface of the groove.

6. The battery cell according to any one of claims 1 to 5, wherein multiple protrusions are provided, and the multiple protrusions are spaced apart.

7. The battery cell according to claim 6, wherein the protrusion is a circular protrusion, an elliptical protrusion, or a strip-shaped protrusion.

8. The battery cell according to claim 7, wherein the protrusion is a strip-shaped protrusion, a length direction of the protrusion is parallel to a width direction of the first end face, and a width direction of the protrusion is parallel to a length direction of the first end face.

9. The battery cell according to claim 8, wherein the multiple protrusions are spaced apart along the length direction of the first end face.

10. The battery cell according to any one of claims 6 to 9, wherein a maximum length of the first end face is L1, and a minimum spacing between two adjacent protrusions is L2, satisfying L1/100 ≤ L2 ≤ L1/2.

11. The battery cell according to any one of claims 1 to 10, wherein the battery cell further comprises a housing, and the electrode assembly is disposed in the housing;
a dimension of the protrusion in a direction perpendicular to the first end face is h; and
the housing comprises a first end wall and a side wall, the first end face is disposed opposite to the first end wall, the side wall is disposed around an edge of the first end wall, an inner surface of the side wall and an inner surface of the first end wall are connected by a fillet transition, and a radius of the fillet is R, satisfying R/10 ≤ h ≤ 2R.

12. The battery cell according to claim 11, wherein 3R/10 ≤ h ≤ R is satisfied.

13. The battery cell according to any one of claims 1 to 12, wherein the dimension of the protrusion in the direction perpendicular to the first end face is h, a thickness of the first insulating portion is t, a tensile strength of the first insulating portion is σ, and a dimension of the electrode assembly in the direction perpendicular to the first end face is H, satisfying 1 ≤ H/(σ*t/h) ≤ 10.

14. The battery cell according to claim 13, wherein 3 ≤ H/(σ*t/h) ≤ 8 is satisfied.

15. The battery cell according to any one of claims 1 to 14, wherein the first insulating portion is provided with a through hole, and along a thickness direction of the first insulating portion, a projection of the through hole does not overlap with a projection of the protrusion.

16. The battery cell according to claim 15, wherein along a length direction of the first insulating portion, an end portion of the first insulating portion is provided with the through hole;
and/or, along a width direction of the first insulating portion, an end portion of the first insulating portion is provided with the through hole.

17. The battery cell according to claim 15 or 16, wherein multiple through holes are provided, and the protrusion is provided between two adjacent through holes.

18. A battery, comprising the battery cell according to any one of claims 1 to 17.

19. An electric apparatus, comprising the battery cell according to any one of claims 1 to 18, wherein the battery cell is configured to provide electrical energy.
